# EUROPEAN PATENT APPLICATION

(11) **EP 2 487 976 A1**
(43) Date of publication of application: **15.08.2012**
(21) Application number: 11290092.3
(22) Date of filing: 09.02.2011
(51) Int. Cl.: H04W 72/04

(54) **Apparatus, system, method and computer program for assigning a radio resource**

(71) Applicant: Alcatel Lucent, 75007 Paris (FR)
(72) Inventor: Hoek, Cornelis, 71732 Tamm (DE)
(74) Representative: Schacht, Mirko

(57) **Abstract**

An embodiment of an apparatus (100) for assigning a radio resource to a serving cell of a base station transceiver of a mobile communication system, wherein the mobile communication system is operative based on a plurality of radio resources, and wherein the serving cell is operative for communicating with at least one mobile transceiver based on the radio resource, comprises a load monitor (110) for determining (300) information on a load condition of the serving cell, and a radio resource selector (120) for selecting (310) the radio resource based on the load condition and a subset of radio resources from the plurality of radio resources, wherein the radio resource selector (120) is adapted for selecting (310) the radio resource from the subset of radio resources when the information on the load condition indicates a load condition below a predefined threshold and for selecting the radio resource from the plurality of radio resources when the information on the load condition indicates a load condition above the predefined threshold. The embodiment further comprises a controller (130) for assigning (320) the radio resource to the serving cell.

## Description

The present invention relates to wireless communications, more particularly but not exclusively to assigning a radio resource in a mobile communication system.

### Background

Interference between different cells, or inter-cell interference, in cellular communication networks has always been an issue since mobile communication networks have been introduced. In order to provide continuous service coverage, areas of adjacent cells or base station transceivers in a cellular systems overlap, i.e. between two adjacent cells or base station transceivers of a cellular system there is an overlapping area wherein signals from either cells or base station transceivers can be received. While a mobile transceiver may only be assigned to one cell, serving cell, of a base station transceiver it may receive its desired signal from only one cell of the base station transceiver and experience other signals as interference. For example, in mobile communication networks using frequency division multiple access (FDMA), frequency reuse patterns have been established. In order to keep interference levels of adjacent cells in appropriate margins, a frequency, i.e. a radio resource, used in one cell is not reused in adjacent cells, and in more advanced reuse patterns it is not reused in a number of tiers or layers of cells around the one cell. Another option to mitigate interference in code division multiple access (CDMA) systems is to use different scrambling codes to identify different cells. After descrambling of a particular cell's signal the despreading operation can provide processing gain for the particular cell's signal over interfering signals from other cells. In addition, the other cell's signal may be determined in a similar way and, supposing the other cell's signal also carries the desired information, both signals may be combined. In such a scenario radio resources of two cells may be assigned to a mobile transceiver, i.e. a load generated by the mobile transceiver may be higher. Here and in the remainder the load generated by users in a cell can be understood as the radio resources used to serve these users in relation to the available radio resources. For example, the number of frequency carriers or time slots used to serve the users in relation to the total number of frequency carriers or time slots available.

### Summary

In an embodiment, an apparatus being operative for assigning a radio resource to a serving cell of a base station transceiver of a mobile communication system, the mobile communication system being operative based on a plurality of radio resources, the serving cell being operative for communicating with at least one mobile transceiver based on the radio resource, comprises a load monitor for determining information on a load condition of the serving cell. Furthermore, the apparatus comprises a radio resource selector for selecting the radio resource based on the load condition and a subset of radio resources from the plurality of radio resources, the radio resource selector being adapted for selecting the radio resource from the subset of radio resources when the information on the load condition indicates a load condition below a predefined threshold and for selecting the radio resource from the plurality of radio resources when the information on the load condition indicates a load condition above the predefined threshold, and a controller for assigning the radio resource to the serving cell.

Such an embodiment may provide the advantage that in certain load conditions, i.e. a load condition below a certain threshold - in the following also referred to as low load scenarios - radio resources are only assigned from a subset of all available radio resources. In embodiments, the subset of radio resources can be different from an adjacent subset of radio resources from which an adjacent radio resource is assigned to an adjacent cell. The terms "adjacent" and "neighboring" will be used synonymic in the following.

In other words, in a low load condition, embodiments may control a serving cell of a base station transceiver such that radio resources are only utilized from a subset of all available radio resources. This may enable means to coordinate the radio resources utilized by adjacent cells or base station transceivers in such a low load scenario.

In some embodiments the subset of radio resources may be predetermined. The subset of radio resources may be preconfigured and therewith, adjacent cells or base station transceivers can be preconfigured to use different, in some embodiments even non-colliding, non-overlapping, or orthogonal subsets of radio resources in low load scenarios. Such embodiments may enable improved signal-to-interference-and-noise ratios (SINR) in low load scenarios.

In embodiments, the information on the load condition can be determined by the number of utilized radio resources from the plurality of radio resources. A radio resource may correspond to one element or a combination of elements of a group comprising a time slot, a bandwidth, a carrier frequency, a code sequence and a spatial sub channel. In some embodiments, the plurality of radio resources may correspond to a plurality of subcarriers in an orthogonal frequency division multiplexing (OFDM) system and the subset of radio resources may correspond to a subset of the plurality of subcarriers in the OFDM system. The load condition may correspond to a number of utilized subcarriers and the predefined threshold may correspond to 1/3 of the plurality of subcarriers. Generally, the load condition may correspond to 1/N of the available radio resources, with N being the number of cells in a cluster of cells using non-colliding radio resources.

In other words, if the load, i.e. number of radio resources utilized, is below one third of all available radio resources, i.e. the plurality of subcarriers, radio resources are only assigned from the subset of radio resources. The subset of radio resources may then be preconfigured in a way, that only one third of the plurality of subcarriers is in the subset. In some embodiments, adjacent cells or base station transceivers may be configured the same way, except that their subsets can comprise different radio resources or subcarriers. In some embodiments, adjacent cells or base station transceivers can be assigned radio resources from subsets, which are completely different, e.g. different sets of subcarriers. Therewith, adjacent cells or base station transceivers may utilize orthogonal sets of subcarriers in the low load condition, which can improve the interference situation, in particular at the cell edges.

In some embodiments, the apparatus may further comprise an interface for receiving information on the subset of radio resources. In other words, such an interface may enable an operator to predefine or configure the subset of radio resources or the load threshold. The interface can be adapted for receiving information on a radio resource utilization of an interfering or adjacent cell or base station transceiver, the information may comprise an indication on an interfering radio resource from the plurality of radio resources, which is utilized by the interfering cell or base station transceiver. The radio resource selector can be further adapted for selecting the radio resource based on the information on the resource utilization of the interfering cell or base station transceiver and the subset of radio resources such that the radio resource is different from the interfering radio resource. In other words, the interface may enable a coordination of utilized radio resources between adjacent or interfering cells or base station transceivers. Some embodiments may therewith enable adaptive interference coordination.

In some embodiments, radio resources utilized for broadcasting information, such as system information or reference signals, may be coordinated. In some embodiments, the interface can be adapted for receiving information on an interfering broadcast radio resource from an interfering cell or base station transceiver. The radio resource selector can be adapted for selecting a broadcast radio resource based on the information on the interfering broadcast radio resource and the plurality of radio resources such that the broadcast radio resource is different from the interfering broadcast radio resource. In some embodiments, the interface can be adapted for receiving information on resource utilization of a plurality of interfering cells or base stations transceivers, the information may comprise indications on interfering radio resources from the plurality of radio resources, which are utilized by the plurality of interfering cells or base station transceivers. The radio resource selector can be adapted for selecting the radio resource further based on the information on the resource utilization of the plurality of interfering cells or base station transceivers and the plurality of radio resources such that the radio resource is different from the plurality of interfering radio resources.

In embodiments the serving cell may be located in a center of a tier of interfering cells or base station transceivers. Embodiments may therefore also implement a mobile communication system comprising a first serving cell having a first apparatus being operative for assigning a radio resource to the first serving cell of the mobile communication system, and a second serving cell having a second apparatus being operative for assigning a radio resource to the second serving cell of the mobile communication system, wherein the coverage areas of the first and the second serving cells are adjacent or interfering, and wherein the first subset of radio resources of the first serving cell and the second subset of radio resources of the second serving cell are different, non-overlapping, or orthogonal.

Embodiments may further comprise a method for assigning a radio resource to a serving cell of a base station transceiver of a mobile communication system, the mobile communication system being operative based on a plurality of radio resources, the serving cell being operative for communicating with at least one mobile transceiver based on the radio resource. The method may comprise a step of determining information on a load condition of the serving cell and a step of selecting the radio resource based on the load condition and a subset of radio resources from the plurality of radio resources when the information on the load condition indicates a load condition below a predefined threshold, and for selecting the radio resource from the plurality of radio resources when the information on the load condition indicates a load condition above the predefined threshold. The method may further comprise a step of assigning the radio resource to the serving cell.

Moreover, embodiments may comprise a computer program having a program code for performing one of the above methods when the computer program is executed on a computer or processor.

Here and in the remainder, information can typically be exchanged using signaling. Exchanging a signal may comprise writing to and/or reading from a memory, transmitting the signal electronically, optically, or by any other appropriate means.

### Brief description of the Figures

Some embodiments of apparatuses and/or methods will be described in the following by way of example only, and with reference to the accompanying figures, in which
Figure 1 shows a simplified block diagram of an embodiment of an apparatus for assigning radio resources to a serving cell of a base station transceiver;
Figure 2a shows schematic representation of an embodiment in a mobile communications network;
Figure 2b shows three view graphs displaying an example of a resource assignment in three different cells;
Figure 2c shows three view graphs illustrating another example of a load condition in an embodiment with bandwidth reduction;
Figure 3a shows another example of a resource assignment using another embodiment;
Figure 3b illustrates three view graphs showing a further example of resource assignment in an embodiment including broadcast channel bandwidth reduction;
Figure 3c illustrates three view graphs showing a further example of resource assignment in an embodiment including broadcast channel bandwidth reduction; and
Figure 3d illustrates a flow chart of an embodiment of a method for assigning a radio resource.

### Description of Embodiments

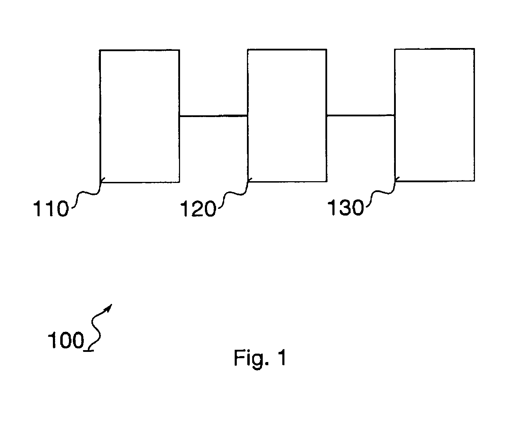

Figure 1 shows a simplified block diagram of an embodiment of an apparatus 100 for assigning radio resources to a serving cell of a base station transceiver. The apparatus 100 is operative for assigning a radio resource to a serving cell of a mobile communication system, the mobile communication system is operative based on a plurality of radio resources, and the serving cell is adapted for communicating with at least one mobile transceiver based on the radio resource.

The apparatus 100 comprises a load monitor 110 for determining information on a load condition of the serving cell. Moreover, the apparatus 100 comprises a radio resource selector 120 for selecting the radio resource based on the load condition and a subset of radio resources from the plurality of radio resources, the radio resource selector 120 being adapted for selecting the radio resource from the subset of radio resources when the information on the load condition indicates a load condition below a predefined threshold, and the radio resource selector 120 is adapted for selecting the radio resource from the plurality of radio resources when the information on the load condition indicates a load condition above the predefined threshold. Furthermore, the apparatus 100 comprises a controller 130 for assigning the radio resource to the serving cell.

As can be seen from Figure 1, the load monitor 110 is coupled to the radio resource selector 120 and the radio resource selector 120 is coupled to the controller 130. Here and in the remainder, entities being "coupled" are to be interpreted as being enabled to exchange information, information signals, respectively.

In an embodiment, the subset of radio resources can be different from an adjacent subset of radio resources from which an adjacent radio resource is assigned to an adjacent cell or base station transceiver.

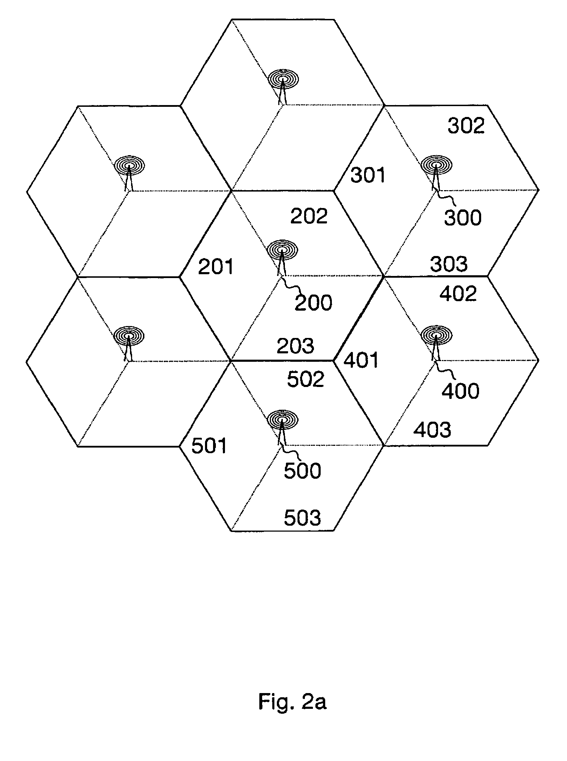

For a better understanding, Figure 2a shall illustrate a schematic representation of an embodiment in a mobile communications network. Figure 2a shows an arrangement of multiple base station transceivers in a cellular mobile communications network. For example, a base station transceiver 200 is adjacent to base station transceivers 300, 400, and 500. As can be seen from Figure 2a, one base station transceiver may operate multiple cells or sectors. The terms "cell" and "sector" are considered synonymic in the remainder. For example, base station transceiver 200 operates three cells, 201, 202, and 203. In a similar manner, base station transceiver 300 operates three cells 301, 302 and 303, base station transceiver 400 operates three cells 401, 402, and 403, and base station transceiver 500 operates three cells 501, 502, and 503. Figure 2a illustrates an example of a network for explaining the subsequent embodiments, which are not limited to the configuration of the network displayed in Figure 2a. Embodiments may be used with any network configuration, e.g. clover leaf configuration, 6-sector configuration, etc.

As it can be seen from Figure 2a and will be assumed in the following, only a portion of the cellular network is displayed. Moreover, it can be seen that the base station transceiver 200 is surrounded by further base station transceivers, where not for all base station transceivers reference signs are provided in the figure. In the following, base station transceiver 200 will be considered, and furthermore, it will be assumed that all surrounding base station transceivers are active.

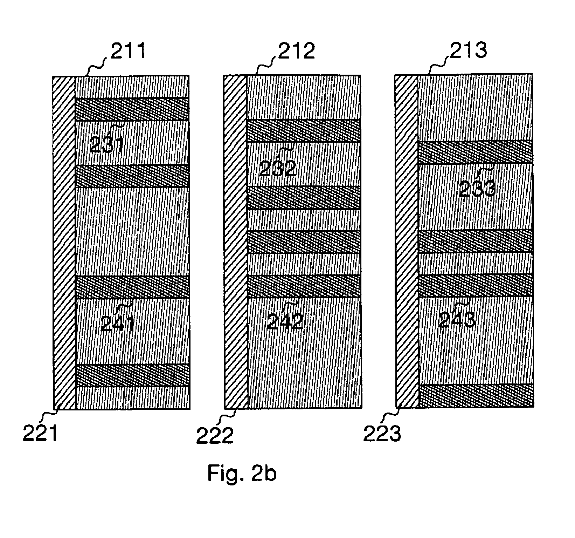

Figure 2b illustrates view graphs showing the resource utilization or resource assignment with respect to base station transceiver 200 shown in Figure 2a, and its three cells 201, 202, and 203. In Figure 2b, the view graph 211 on the left illustrates all radio resources or the plurality of radio resources which are available in cell 201. Consequently, the view graph 212 centered in Figure 2b illustrates the plurality of radio resources available in cell 202, and view graph 213 on the right illustrates the plurality of radio resources available in cell 203. As the view graphs 211, 212, and 213 indicate, all three cells 201; 202, and 203 utilize the same plurality of radio resources of which different ones, e.g. radio resources 231, 232, 233, 241, 242, 243, are actually assigned in the situation displayed. In other words, radio resources 231, 232, 233, 241, 242, 243 illustrate user assigned radio resources.

The view graphs displayed in Figure 2b can be interpreted in different ways, dependent on a radio resource under consideration. For example, such a view graph can be interpreted as a frequency-time domain plane. For example, a bandwidth could be represented by the vertical extension of a view graph, while the time domain could be represented by the horizontal extension of a view graph displayed in Figure 2b and the following figures. Each of the three view graphs displayed in Figure 2b shows on the left-hand side a separated area 221, 222, and 223. These areas may represent radio resources, which are utilized for common channels, for example for pilot channels, reference channels, broadcast channels, system information, etc. From the view graphs it can be seen that these resources are utilized using the full bandwidth, according the interpretation of the view graphs which was given above, generally they may utilize one dimension of the available radio resources. According to another interpretation, e.g. when the time domain extends vertically in the view graphs displayed, a time continuous channel could be used for the common channels. At this point it is important that the view graphs of Figure 2b illustrate the plurality of radio resources available in each cell and that the radio resources considered are two dimensional. Generally, in embodiments a radio resource, and therewith a dimension of the view graph, may correspond to one element or a combination of elements of a group comprising a time slot, a bandwidth, a carrier frequency, a code sequence and a spatial sub channel.

Furthermore, in each view graph shown in Figure 2b radio resources are illustrated, which are assumed to be assigned to different users in the network. For example, view graph 211 shows radio resources 231 and 241, which are assumed to be assigned to a user or users served by this cell. It is to be noted that more occupied radio resources are indicated by view graph 211, reference signs are only provided for radio resources 231 and 241, in order to keep a better overview of the figure. Accordingly, view graph 212 shows assigned radio resources 232 and 242, and view graph 213 shows user assigned radio resources 223 and 243.

Furthermore, Figure 2b illustrates that radio resources 241, 242, and 243 are assigned to users in all three cells 201, 202, and 203. Now referring to Figure 2a, a user located at the cell edge, e.g. the area between cells 201 and 202, between cells 202 and 203, or between cells 203 and 201, respectively, will experience interference from the other cells. In other words, a user connected to cell 201 being at the edge between the two cells 201 and 202, will also receive a strong signal from cell 202, using the same radio resource. Since the signal received from cell 202 is of no use for the user, it will be interference. This situation is depicted in Figure 2b by the radio resources 241, 242, and 243, which are utilized in all three cells, and may correspond to the same frequency or time resources.

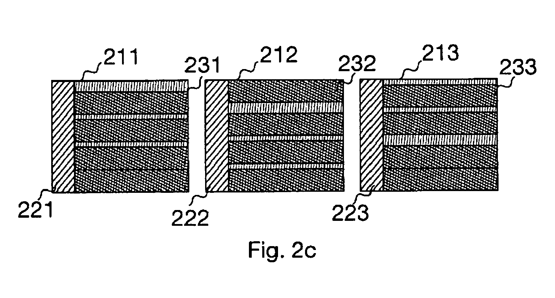

Moreover, the three view graphs of Figure 2b show that each of the three cells does not utilize all of the plurality of resources available, which is indicated by the lighter shaded areas. In other words, each cell has multiple radio resources, which are not assigned. Therefore, assuming subcarriers as radio resource, the actual bandwidth for which a power amplifier may be set up in each of the cells is higher than the sum of the subcarrier bandwidths actually utilized. In order to conserve transmission power, the bandwidth could be reduced to the bandwidth which is actually utilized. This situation is displayed in Figure 2c.

Figure 2c provides the three view graphs 211, 212, and 213 illustrating the resource consumption in the three cells 201, 202, and 203. As can be easily seen when comparing Figures 2b and 2c, the overall resource utilization, especially when considering resources for the common channels 221, 222, and 223, has been reduced. This, however, is only possible at the price of more colliding radio resources, as indicated by resources 231, 232, and 233 in Figure 2c.

In embodiments, adaptive resource allocation may be used for reducing the power consumption in case of low load situations. For example, the used frequency resources can be reduced. For some embodiments, a global system for mobile communications (GSM) or a wideband code division multiple access system (W-CDMA) may be considered as mobile communication network. In a GSM multicarrier mobile system or in a W-CDMA multicarrier mobile system, carriers or time slots can be switched off when not required. In such an embodiment, the reduced radio resource, as illustrated by Figures 2b and 2c, would correspond to a number of carriers or time slots being switched off.

In some embodiments, orthogonal frequency division multiple access networks (OFDMA) may be utilized, as e.g. standardized by the third generation partnership project (3GPP) and also called long term evolution (LTE) or LTE-advanced (LTE-A). In some embodiments, an OFDM (LTE) mobile communication system may reduce the bandwidth (BW) e.g. from 20 MHz to 10MHz or 5 MHz, as indicated by Figures 2b and 2c. The reduced BW may result in a reduced output power and the operating point of the power amplifier used for a cell at a base station transceiver, can be modified in several steps or fully adaptive in order to reduce the power consumption.

Some embodiments may utilize a time domain multiplexing (TDM) mobile communication system. In a TDM system the traffic may be concentrated on a small portion of the timeslots and the power amplifier can be switched off during the other unused timeslots. In such an embodiment, the view graphs depicted in the figures may be interpreted as time domain resources being indicated vertically and, for example, frequency domain resources being indicated horizontally. Some embodiments may utilize combinations of radio resources, i.e. in these embodiments the view graphs may be interpreted as displaying combinations of radio resources in each dimension, e.g. a combination of time, frequency, or spatial radio resources.

Embodiments switching off carriers for reducing the BW may be further improved in embodiments, wherein resource coordination between different cells is utilized. As indicated by Figure 2c, although the utilized resources are reduced in each cell, the interference created may be high, since a user located at a cell's edge will likely experience another user assigned to an adjacent cell using the same resource, which may create high variations of the received SINR, a situation which may also be referred to as flashlight effect.

Some embodiments may take advantage of the SINR impact of the resource allocation. For example, in an OFDM system, depending on the allocation of the frequency resources or subcarriers to the data packets, a high SINR can result if the neighbor cells do not use the same resource, or a low SINR can result if one or two neighbor cells have chosen the same resource. This allocation, and thereby the SINR, may change from timeslot to timeslot.

Although the overall bandwidth utilized by a single cell or base station transceiver may be reduced according to Figures 2b and 2c, e.g. in an LTE system, it is easy to see that in these embodiments the probability that all cells use the same frequency resources is high, resulting in a higher probability for a low SINR. also called long term evolution (LTE) or LTE-advanced (LTE-A). In some embodiments, an OFDM (LTE) mobile communication system may reduce the bandwidth (BW) e.g. from 20 MHz to 10MHz or 5 MHz, as indicated by Figures 2b and 2c. The reduced BW may result in a reduced output power and the operating point of the power amplifier used for a cell at a base station transceiver, can be modified in several steps or fully adaptive in order to reduce the power consumption.

Some embodiments may utilize a time domain multiplexing (TDM) mobile communication system. In a TDM system the traffic may be concentrated on a small portion of the timeslots and the power amplifier can be switched off during the other unused timeslots. In such an embodiment, the view graphs depicted in the figures may be interpreted as time domain resources being indicated vertically and, for example, frequency domain resources being indicated horizontally. Some embodiments may utilize combinations of radio resources, i.e. in these embodiments the view graphs may be interpreted as displaying combinations of radio resources in each dimension, e.g. a combination of time, frequency, or spatial radio resources.

Embodiments switching off carriers for reducing the BW may be further improved in embodiments, wherein resource coordination between different cells is utilized. As indicated by Figure 2c, although the utilized resources are reduced in each cell, the interference created may be high, since a user located at a cell's edge will likely experience another user assigned to an adjacent cell using the same resource, which may create high variations of the received SINR, a situation which may also be referred to as flashlight effect.

Some embodiments may take advantage of the SINR impact of the resource allocation. For example, in an OFDM system, depending on the allocation of the frequency resources or subcarriers to the data packets, a high SINR can result if the neighbor cells do not use the same resource, or a low SINR can result if one or two neighbor cells have chosen the same resource. This allocation, and thereby the SINR, may change from timeslot to timeslot.

Although the overall bandwidth utilized by a single cell or base station transceiver may be reduced according to Figures 2b and 2c, e.g. in an LTE system, it is easy to see that in these embodiments the probability that all cells use the same frequency resources is high, resulting in a higher probability for a low SINR.

Embodiments may therefore choose the subset of radio resources different from an adjacent subset of radio resources from which an adjacent radio resource is assigned to an adjacent base station transceiver, an adjacent cell, or a neighbor cell.

In some embodiments, the subset of radio resources can be predetermined. In other words, an operator of an apparatus 100, which may be integrated in a base station transceiver 200, may configure or predetermine the subset of radio resources, thereby configure the subsets of neighboring cells differently; in some embodiments they may be completely non-overlapping or orthogonal. The predetermined subset of radio resources may be set once by an operator, e.g. when installing a respective base station transceiver. In other embodiments, the predetermined subset of radio resources may be set intermittently, for instance, by a programming or parameter signal.

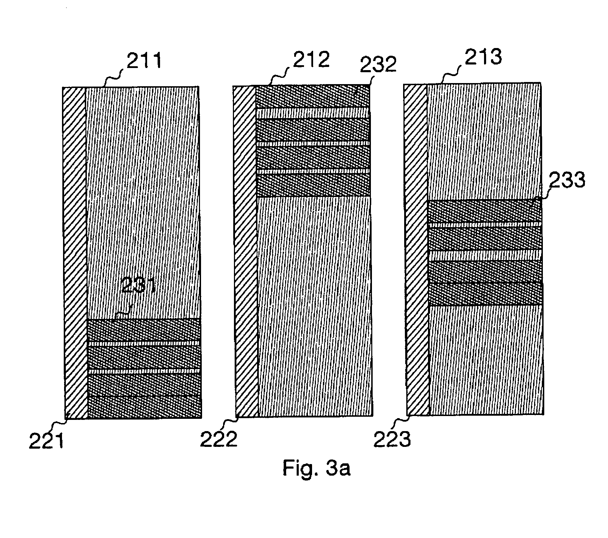

Figure 3a illustrates resource utilization view graphs in line with the preceding figures. As can be seen from Figure 3a, view graph 211, indicating the load condition in cell 201 of Figure 2a, uses only the lower third of the available resources, for example only the lower third of the spectrum from which subcarriers are available. Moreover, view graph 212, indicating the load condition in cell 202 of Figure 2a, uses only the upper third of the available resources, for example only the upper third of the spectrum from which subcarriers are available. Furthermore, view graph 213, indicating the load condition in cell 203 of Figure 2a, uses only the centered third of the available resources, for example, only the centered third of the spectrum from which subcarriers are available. In embodiments utilizing frequency resources, the information on the load condition can be determined by the number of utilized radio resources from the plurality of radio resources.

In such an embodiment, the radio resources 231, 232, and 233 may exemplify subcarriers from an OFDM system and the load condition of a cell may be determined by the number of assigned subcarriers in relation to the overall number of subcarriers, i.e. the plurality of radio resources. As each of the cells in the embodiment is assumed to not utilize more than a third of the available radio resources, the subset for cell 201 may be configured to the lower third of the subcarriers, the subset for cell 202 may be configured to the upper third of the subcarriers, and the subset for cell 203 may be configured to the centered third of the subcarriers. It is to be noted that this configuration is only an example of a configuration, which results in a frequency reuse of 3. Embodiments may foresee multiple different subset configurations, among them any configuration that has configured at least one radio resource different from the subset of a neighbor cell. In some embodiments different sets of subcarriers may be configured with no overlap. These subsets may not comprise continuous spectra, as indicated by Figure 3a for a better graphical representation only, they may utilize any mutually different configurations, in some embodiments orthogonal or non-overlapping configurations may be utilized.

Generally, in embodiments a radio resource may correspond to one of or a combination of the group of a time slot, a bandwidth, a carrier frequency, a code sequence or a spatial sub channel. As already mentioned, in some embodiments the plurality of radio resources may correspond to a plurality of subcarriers in an OFDM system and the subset of radio resources may correspond to a subset of the plurality of subcarriers in the OFDM system. In such an embodiment, the load condition may correspond to a number of utilized subcarriers and the predefined threshold may correspond to 1/2, 1/3, 1/4, 1/5, etc. of the plurality of subcarriers.

In some embodiments, the apparatus 100 may further comprise an interface for receiving information on the subset of radio resources. The interface may enable an operator or user to configure the subset of radio resources. Furthermore, the interface can be adapted for receiving information on a radio resource utilization of an interfering or neighboring base station transceiver or cell, the information may comprise an indication on an interfering radio resource from the plurality of radio resources, which is utilized by the interfering or neighboring base station transceiver or cell. In embodiments the radio resource selector can be further adapted for selecting the radio resource based on the information on the resource utilization of the interfering or neighboring cell or base station transceiver and the subset of radio resources such that the radio resource is different from the interfering radio resource.

As already mentioned and also illustrated by Figure 2a, a base station transceiver may operate multiple cells or sectors, e.g. base station transceiver 200 and cells 201, 202, and 203. The interface may enable the apparatus to coordinate the subsets of the radio resources of multiple cells, e.g. the three cells. For instance, in an OFDM system, if none of these three cells uses more than e.g. a third of the available subcarriers, i.e. the load conditions are all below the threshold, the subsets of radio resources can be made non-overlapping for the three cells, cf. Figure 3a. Embodiments may also provide advantages in higher load conditions by coordinating the subsets in a way that a number of reused radio resources in neighboring cells is reduced, in some embodiments even kept to a minimum.

In further embodiments the interface may be adapted for exchanging information between adjacent base station transceivers directly or indirectly, as e.g. base station transceiver 200 and base station transceiver 300 in Figure 2a. As already mentioned above, embodiments may utilize different mobile communication networks, as e.g. GSM Enhanced Data Rates for GSM Evolution (EDGE) Radio Access Network (GERAN), Universal Mobile Telecommunications System (UMTS) Terrestrial Radio Access Network (UTRAN), Evolved UTRAN (E-UTRAN), CDMA 2000, etc. Correspondingly, the base station transceivers may correspond to a GERAN-Base Transceiver Station (BTS), a UMTS-NodeB, an eNodeB, a CDMA2000-BaseStation (BS), etc. Furthermore, the interface can be embodied as any interface directly or indirectly connecting two cells or base station transceivers. An indirect connection can be understood as a connection through a third node, as e.g. a connection of two NodeBs via a radio network controller (RNC) in a UTRAN. Some examples for interfaces are the GERAN Abis interface, the UMTS Iur and Iub interfaces, the CDMA2000 A3, A5 or A7 interfaces, the E-UTRAN X2 interface, etc.

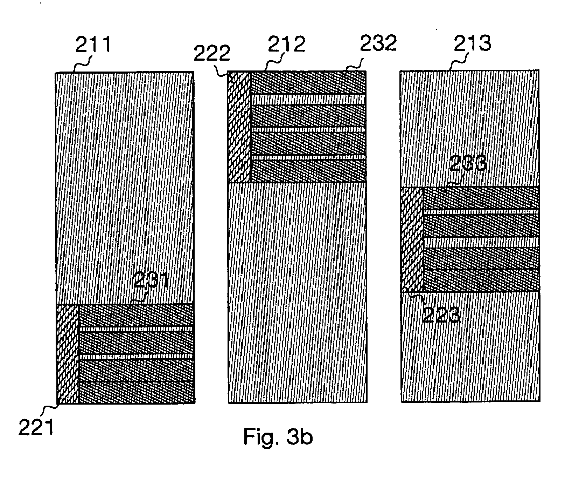

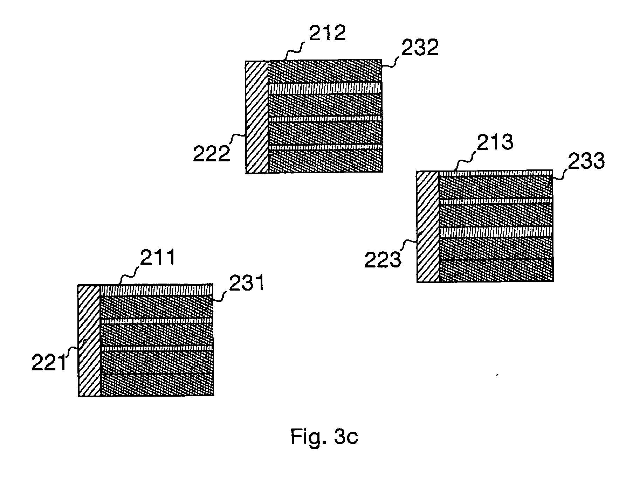

In embodiments the interface can be further adapted for receiving information on an interfering broadcast radio resource from the interfering cell or base station transceiver, wherein the radio resource selector is adapted for selecting a broadcast radio resource based on the information on the interfering broadcast radio resource and the plurality of radio resources such that the broadcast radio resource is different from the interfering broadcast radio resource. Such an embodiment is illustrated in Figure 3b, where it can be seen from the view graphs that the broadcast radio resources used for the common channels 221, 222, and 223, have been selected in a way that there is no overlap. Figure 3b shows the same elements as have already been explained for Figure 3a. However, since the broadcast radio resources used in cells 201, 202, and 203 do not collide any more, the interference situation for these channels can be improved. Figure 3c illustrates a similar situation as Figure 3b, however, the background illustrating the plurality of radio resources available was omitted to clearly point out the separation of the radio resources in the cells in this embodiment.

In further embodiments, the interface can be adapted for receiving information on radio resource utilization of a plurality of interfering cells or base stations, the information may comprise indications on interfering radio resources from the plurality of radio resources, which are utilized by the plurality of interfering cells or base station transceivers. The radio resource selector can be adapted for selecting the radio resource further based on the information on the resource utilization of the plurality of interfering cells or base station transceivers and the plurality of radio resources such that the radio resource is different from the plurality of interfering radio resources. In other words, in embodiments multiple cells or base station transceivers can be taken into account. Using an embodiment comprising the interface, information may be exchanged between different base station transceivers and therewith interference coordination may be carried out throughout the entire network for the low load condition and, for example, establishing a frequency reuse of e.g. 3, 4, etc.

In an embodiment the serving cell can be located in a center of a tier of the interfering base station transceivers, as e.g. one of the cells 201, 202, or 203 in Figure 2a. Embodiments may therefore also comprise a mobile communication system having a first serving cell having a first apparatus for assigning radio resources according to the above description and a second serving cell having a second apparatus for assigning radio resources according to the above description, wherein the coverage areas of the first and the second cells are adjacent, as e.g. shown in Figure 2a. In such an embodiment the first and second serving cells may be established by the same or different base station transceivers. The first subset of radio resources of the first cell and the second subset of radio resources of the second cell can be different, overlapping or orthogonal, i.e. completely non-overlapping.

In embodiments a frequency or time reuse pattern may be adaptively changed if the traffic load allows it. For example, if a small cluster of 3 cells has a load of < 1/3 of full load, e.g. only one third of the available resources are utilized to serve the traffic demand, then the frequency reuse can be increased to 3. In this case, every cell can use 1/3 of the frequency or time resources, i.e. of the general radio resources, and every cell may use a different part of the allocated spectrum or time resources. In such embodiments, inter-cell interference may be greatly reduced because a mobile in a cell 201 may receive no interference from cell 202 and 203. In embodiments the reduced interference may be used for an additional transmit power reduction in several ways. In some embodiments, the packet payload can be kept constant and the transmit power can be reduced. In other words, since the interference has been reduced the transmit power can also be reduced in order to keep similar SINR levels.

In other embodiments the transmit power can be kept constant but the packet payload can be increased, which may result in less packets to be transmitted for transferring a certain amount of data. In other words, since the interference has been reduced the SINR is higher at the same transmit power levels. Therefore, the quality of the decoded received data packets will increase and an alternative modulation/coding scheme can be selected such that more data is transferred per packet. In addition, fewer re-transmissions may be necessary to enable sufficient decoder performance. As a result fewer transmissions may be required for transferring the same amount of data.

In further embodiments frequency resources that are used for transferring the packet payload may be reduced. As a result of one of the above embodiments, the cell load is further reduced e.g. to 1/6 because even less than 1/3 of the available resources are now used. This effect may result from subcarriers, which were used for transmissions and/or re-transmissions, which are no longer needed. The additional capacity could be used for a further increase of the frequency reuse to e.g. 6 with even lower interference and so on.

Figure 3a illustrates an LTE scenario, in which the standard requires the transmission of the control and pilot information, i.e. the common channel 221, 222, and 223, over the whole bandwidth. The data or dedicated transfers can use a frequency reuse of 3. Embodiments may therefore provide an advantage as the average data SINR may be higher than in Figures 2b and 2c so that less frequency or time resources and thus less power may be necessary for transferring the payload. Furthermore, the SINR has fewer variations from timeslot to timeslot. As a further result, the selection of an optimized Modulation and Coding Scheme (MCS) may be simplified. Moreover, embodiments may only require a small amount of information to be transferred between the cells without stringent timing constraints.

In some embodiments, the apparatus 100 may be implemented in a femto or pico cell. A femto or pico cell is a base station transceiver, which may be implemented in addition to a macro cell environment as depicted in Figure 2a, but which has a significantly smaller coverage area. The coverage area of a femto or pico cell may be completely surrounded by the coverage area of one of the cells or sectors displayed in Figure 2a. Such a femto or pico cell may be implemented in a private or home environment and interference coordination with the macro cell environment can be critical. Therefore, the above mentioned interface may be a digital subscriber line (DSL) or any other wire-bound communication interface, through which interference coordination between the macro cell environment and the femto or pico cell can be carried out, namely the subset of radio resources, may be configured. In other embodiments, the interface may also enable a wireless information exchange, e.g. with a surrounding macro cell in order to coordinate radio resources in low load conditions according to the above description.

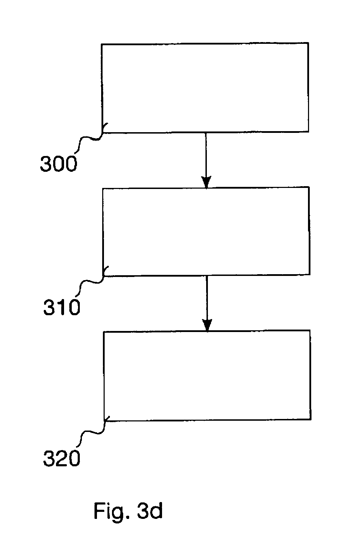

Embodiments may also comprise a method for assigning a radio resource to a serving cell of a base station transceiver of a mobile communication system, which is illustrated by a block diagram in Figure 3d. According to the above, the mobile communication system is operative based on a plurality of radio resources and the serving cell is operative for communicating with at least one mobile transceiver based on the radio resource. The method comprises a step 300 of determining information on a load condition of the serving cell. Moreover, the method comprises a step 310 of selecting the radio resource based on the load condition and a subset of radio resources from the plurality of radio resources when the information on the load condition indicates a load condition below a predefined threshold and for selecting the radio resource from the plurality of radio resources when the information on the load condition indicates a load condition above the predefined threshold. Furthermore, the method comprises a step 320 of assigning the radio resource to the serving cell.

In further embodiments of the method, the method may comprise a further step of assigning the subset of radio resources different from a neighboring subset of radio resources, which is assigned to a neighboring or interfering cell. The neighboring or interfering cell may be assigned to the same or a different base station transceiver.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "controller", "load monitor" or "radio resource selector", may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (100) being operative for assigning a radio resource to a serving cell of a base station transceiver of a mobile communication system, the mobile communication system being operative based on a plurality of radio resources, the serving cell being operative for communicating with at least one mobile transceiver based on the radio resource, comprising
a load monitor (110) for determining information on a load condition of the serving cell;
a radio resource selector (120) for selecting the radio resource based on the load condition and a subset of radio resources from the plurality of radio resources, the radio resource selector being adapted for selecting the radio resource from the subset of radio resources when the information on the load condition indicates a load condition below a predefined threshold and for selecting the radio resource from the plurality of radio resources when the information on the load condition indicates a load condition above the predefined threshold; and
a controller (130) for assigning the radio resource to the serving cell.

2. The apparatus (100) of claim 1, wherein the subset of radio resources is different from a neighboring subset of radio resources from which a neighboring radio resource is assigned to a neighboring cell.

3. The apparatus (100) of claim 1, wherein the subset of radio resources is predetermined.

4. The apparatus (100) of claim 1, wherein the information on the load condition is determined by a number of utilized radio resources from the plurality of radio resources.

5. The apparatus (100) of claim 1, wherein a radio resource corresponds to one element or a combination of elements of a group comprising a time slot, a bandwidth, a carrier frequency, a code sequence and a spatial sub channel.

6. The apparatus (100) of claim 1, wherein the plurality of radio resources corresponds to a plurality of subcarriers in an orthogonal frequency division multiplexing , OFDM, system and wherein the subset of radio resources corresponds to a subset of the plurality of subcarriers in the OFDM system.

7. The apparatus (100) of claim 6, wherein the load condition corresponds to a number of utilized subcarriers and wherein predefined threshold corresponds to 1/3 of the plurality of subcarriers.

8. The apparatus (100) of claim 1, further comprising an interface for receiving information on the subset of radio resources.

9. The apparatus (100) of claim 8, wherein the interface is adapted for receiving information on a radio resource utilization of an interfering cell, the information comprising an indication on an interfering radio resource from the plurality of radio resources, which is utilized by the interfering cell, and wherein the radio resource selector (120) is further adapted for selecting the radio resource based on the information on the resource utilization of the interfering cell and the subset of radio resources such that the radio resource is different from the interfering radio resource.

10. The apparatus (100) of claim 9, wherein the interface is further adapted for receiving information on an interfering broadcast radio resource from the interfering cell, wherein the radio resource selector is adapted for selecting a broadcast radio resource based on the information on the interfering broadcast radio resource and the plurality of radio resources such that the broadcast radio resource is different from the interfering broadcast radio resource.

11. The apparatus (100) of claim 8, wherein the interface is adapted for receiving information on resource utilization of a plurality of interfering cells, the information comprising indications on interfering radio resources from the plurality of radio resources, which are utilized by the plurality of interfering cells and wherein the radio resource selector (120) is adapted for selecting the radio resource further based on the information on the resource utilization of the plurality of interfering cells and the plurality of radio resources such that the radio resource is different from the plurality of interfering radio resources.

12. The apparatus (100) of claim 11, wherein the serving cell is located in a center of a tier of the interfering cells.

13. A mobile communication system comprising a first serving cell having a first apparatus (100) according to claim 1 and comprising a second serving cell having a second apparatus (100) according to claim 1, wherein the coverage areas of the first and the second serving cells are adjacent, wherein the first subset of radio resources for the first serving cell and the second subset of radio resources for the second serving cell are orthogonal.

14. A method for assigning a radio resource to a serving cell of a base station transceiver of a mobile communication system, the mobile communication system being operative based on a plurality of radio resources, the serving cell being operative for communicating with at least one mobile transceiver based on the radio resource, comprising
determining (300) information on a load condition of the serving cell;
selecting (310) the radio resource based on the load condition and a subset of radio resources from the plurality of radio resources when the information on the load condition indicates a load condition below a predefined threshold and for selecting the radio resource from the plurality of radio resources when the information on the load condition indicates a load condition above the predefined threshold; and assigning (320) the radio resource to the serving cell.

15. A computer program having a program code for performing the method of claim 14 when the computer program is executed on a computer or processor.

## Amended claims

### Amended claims in accordance with Rule 137(2) EPC.

**1.** An apparatus (100) being operative for assigning a radio resource to a serving cell of a base station transceiver of a mobile communication system, the mobile communication system being operative based on a plurality of radio resources, the serving cell being operative for communicating with at least one mobile transceiver based on the radio resource, comprising
a load monitor (110) for determining information on a load condition of the serving cell;
a radio resource selector (120) for selecting the radio resource based on the load condition and a subset of radio resources from the plurality of radio resources, the radio resource selector being adapted for selecting the radio resource from the subset of radio resources when the information on the load condition indicates a load condition below a predefined threshold and for selecting the radio resource from the plurality of radio resources when the information on the load condition indicates a load condition above the predefined threshold;
a controller (130) for assigning the radio resource to the serving cell, wherein the plurality of radio resources corresponds to a plurality of subcarriers in an orthogonal frequency division multiplexing (OFDM) system and wherein the subset of radio resources corresponds to a subset of the plurality of subcarriers in the OFDM system; and
an interface for receiving information on the subset of radio resources, wherein the interface is adapted for receiving information on a radio resource utilization of an interfering cell, the information comprising an indication on an interfering radio resource from the plurality of radio resources, which is utilized by the interfering cell, and wherein the radio resource selector (120) is further adapted for selecting the radio resource based on the information on the resource utilization of the interfering cell and the subset of radio resources such that the radio resource is different from the interfering radio resource .

**2.** The apparatus (100) of claim 1, wherein the subset of radio resources is different from a neighboring subset of radio resources from which a neighboring radio resource is assigned to a neighboring cell.

**3.** The apparatus (100) of claim 1, wherein the subset of radio resources is predetermined.

**4.** The apparatus (100) of claim 1, wherein the information on the load condition is determined by a number of utilized radio resources from the plurality of radio resources.

**5.** The apparatus (100) of claim 1, wherein a radio resource corresponds to one element or a combination of elements of a group comprising a time slot, a bandwidth, a carrier frequency, a code sequence and a spatial sub channel.

**6.** The apparatus (100) of claim 1, wherein the load condition corresponds to a number of utilized subcarriers and wherein predefined threshold corresponds to 1/3 of the plurality of subcarriers.

**7.** The apparatus (100) of claim 1, wherein the interface is further adapted for receiving information on an interfering broadcast radio resource from the interfering cell, wherein the radio resource selector is adapted for selecting a broadcast radio resource based on the information on the interfering broadcast radio resource and the plurality of radio resources such that the broadcast radio resource is different from the interfering broadcast radio resource.

**8.** The apparatus (100) of claim 1, wherein the interface is adapted for receiving information on resource utilization of a plurality of interfering cells, the information comprising indications on interfering radio resources from the plurality of radio resources, which are utilized by the plurality of interfering cells and wherein the radio resource selector (120) is adapted for selecting the radio resource further based on the information on the resource utilization of the plurality of interfering cells and the plurality of radio resources such that the radio resource is different from the plurality of interfering radio resources.

**9.** The apparatus (100) of claim 10, wherein the serving cell is located in a center of a tier of the interfering cells.

**10.** A mobile communication system comprising a first serving cell having a first apparatus (100) according to claim 1 and comprising a second serving cell having a second apparatus (100) according to claim 1, wherein the coverage areas of the first and the second serving cells are adjacent, wherein the first subset of radio resources for the first serving cell and the second subset of radio resources for the second serving cell are orthogonal.

**11.** A method for assigning a radio resource to a serving cell of a base station transceiver of a mobile communication system, the mobile communication system being operative based on a plurality of radio resources, the serving cell being operative for communicating with at least one mobile transceiver based on the radio resource, comprising
determining (300) information on a load condition of the serving cell;
selecting (310) the radio resource based on the load condition and a subset of radio resources from the plurality of radio resources when the information on the load condition indicates a load condition below a predefined threshold and for selecting the radio resource from the plurality of radio resources when the information on the load condition indicates a load condition above the predefined threshold; assigning (320) the radio resource to the serving cell,
wherein the plurality of radio resources corresponds to a plurality of subcarriers in an orthogonal frequency division multiplexing (OFDM) system and wherein the subset of radio resources corresponds to a subset of the plurality of subcarriers in the OFDM system; and
receiving information on the subset of radio resources of an interfering cell, the information comprising an indication on an interfering radio resource from the plurality of radio resources, which is utilized by the interfering cell, and wherein the selecting is further adapted for selecting the radio resource based on the information on the resource utilization of the interfering cell and the subset of radio resources such that the radio resource is different from the interfering radio resource.

**12.** A computer program having a program code for performing the method of claim 11 when the computer program is executed on a computer or processor.
